# EUROPÄISCHE PATENTSCHRIFT

(11) **EP 3 339 564 B1**
(45) Veröffentlichungstag und Bekanntmachung des Hinweises auf die Patenterteilung: **12.06.2019**
(21) Anmeldenummer: 16205312.8
(22) Anmeldetag: 20.12.2016
(51) Int. Cl.: E21B 27/00, E02D 1/06

(54) **VORRICHTUNG UND VERFAHREN ZUR ENTNAHME EINER PROBE**
METHOD AND DEVICE FOR REMOVING A SAMPLE
DISPOSITIF ET PROCÉDÉ DE PRÉLÈVEMENT D'UN ÉCHANTILLON

(43) Veröffentlichungstag der Anmeldung: 27.06.2018
(73) Patentinhaber: BAUER Spezialtiefbau GmbH, 86529 Schrobenhausen (DE)
(72) Erfinder: DUCHOW, Stephan, 30989 Gehrden (DE)
(74) Vertreter: Wunderlich & Heim Patentanwälte Partnerschaftsgesellschaft mbB

(56) Entgegenhaltungen:
- DE-A1- 4 429 136
- DE-A1-102012 106 855
- DE-B3- 10 255 567

## Beschreibung

Die Erfindung betrifft eine Vorrichtung zur Entnahme einer Probe einer Füllung, mit welcher ein Loch im Boden gefüllt ist, mit einem Behälter mit mindestens einer Einlassöffnung zum Einströmen der Füllung in einen Aufnahmeraum des Behälters, gemäß dem Oberbegriff des Anspruchs 1.

Die Erfindung betrifft weiterhin ein Verfahren zur Entnahme einer Probe einer Füllung, mit welcher ein Loch im Boden gefüllt ist, mit einem Behälter mit mindestens einer Einlassöffnung, durch welche Füllung in einen Aufnahmeraum des Behälters einströmt, gemäß dem Oberbegriff des Anspruchs 9.

Eine gattungsbildende Vorrichtung zur Probenentnahme ist aus der EP 2 695 996 B1 bekannt. Die Vorrichtung weist dabei einen Behälter mit einem Klappboden und einem Klappdeckel auf, welche über eine Kopplungsstange miteinander gekoppelt sind. Bei dieser Anordnung ist der Behälter beim Abteufen der Vorrichtung in Suspension geöffnet, wobei die Suspension den Behälter durchströmen kann. Bei einem nach oben Ziehen schließen sich die Klappen automatisch, so dass Suspension eines bestimmten Abschnittes in der Vorrichtung eingeschlossen ist und als Probe entnommen werden kann.

Derartige Vorrichtungen und Verfahren können insbesondere bei der Erstellung von Bohrpfählen oder Schlitz- oder Dichtwänden im Boden eingesetzt werden. Dabei wird ein Loch im Boden erstellt, welcher mit einer Füllung, insbesondere einer aushärtbaren Suspension, verfüllt wird.

Aus Gründen der Qualitätssicherung und Qualitätsdokumentation ist es häufig erwünscht, Informationen über das entsprechende auszuhärtende Medium in bestimmten Tiefen des Loches zu erhalten. Beispielsweise kann durch eine entsprechende Probenentnahme festgestellt werden, ob eine Mörtelzusammensetzung in einer bestimmten Tiefe einer vorgegebenen Zusammensetzung entspricht, so dass eine zuverlässige Aushärtung sichergestellt ist.

Aus der DE 10 2012 106 855 A1, der DE 10 2011 082 658 A1 und der DE 102 55 567 B3 sind Vorrichtungen zur Probenentnahme bekannt, bei welchen eine Einlassöffnung mittels eines aufblasbaren Körpers geschlossen und geöffnet werden kann.

Die zuvor beschriebenen Vorrichtungen zur Probenentnahme weisen jeweils mehrere Komponenten zum Öffnen und Schließen der Einlassöffnung auf. Um die Funktionsfähigkeit sowie die Güte der Probenentnahme bei unterschiedlichen Löchern oder unterschiedlichen Lochtiefen zu gewährleisten, ist eine sorgfältige und damit aufwändige Reinigung der Vorrichtungen nach jedem Vorgang notwendig. Dies gilt umso mehr, da die als Probe entnommene Suspension üblicherweise aushärtet. Dies kann die Funktionsweise insbesondere von beweglichen Komponenten im Falle der Aushärtung beeinträchtigen oder sogar zerstören.

Der Erfindung liegt die **Aufgabe** zugrunde, eine Vorrichtung und ein Verfahren zur Entnahme einer Probe einer Füllung eines Loches im Boden anzugeben, mit welchen eine besonders effiziente Probenentnahme ermöglicht wird.

Die Aufgabe wird nach der Erfindung zum einen durch eine Vorrichtung mit den Merkmalen des Anspruchs 1 und zum anderen mit einem Verfahren mit den Merkmalen des Anspruchs 9 gelöst. Bevorzugt Ausführungsvarianten der Erfindung sind in den jeweils abhängigen Ansprüchen angegeben.

Die erfindungsgemäße Vorrichtung ist dadurch gekennzeichnet, dass eine Verschlusskappe auf die Einlassöffnung gesteckt und diese hierdurch verschlossen ist und dass der Behälter mit einer Druckluftleitung versehen ist, welche in den Aufnahmeraum mündet, wobei bei Einleitung von Druckluft in den Aufnahmeraum die Verschlusskappe von der Einlassöffnung gelöst und diese zum Einströmen der Füllung freigegeben ist.

Eine Grundidee der Erfindung liegt darin, die Vorrichtung möglichst einfach und mit wenigen Komponenten auszubilden. Nach der Erfindung kann ein einfacher Behälter eingesetzt werden, dessen mindestens eine Einlassöffnung mit einer Verschlusskappe verschlossen ist. Dabei ist die Verschlusskappe von außen auf die Einlassöffnung aufgesteckt und verschließt diese mit einer gewissen Presspassung. Bei Erreichen einer gewünschten Tiefe zur Probenentnahme wird die Verschlusskappe in einfacher Weise dadurch gelöst, dass über eine Druckluftleitung Druckluft unmittelbar in den Aufnahmeraum des Behälters eingeleitet wird. Hierdurch wird die Verschlusskappe aus der Einlassöffnung ausgetrieben. Der Aufnahmeraum wird insgesamt als ein Druckraum genutzt, welcher mit Druckluft gefüllt ist. Durch die so geöffnete Einlassöffnung kann die Füllung, insbesondere eine aushärtbare Suspension, in den Behälter einströmen. Beim Einströmen wird die Druckluft innerhalb des Behälters bei entsprechender Entlüftung nach oben durch die Druckluftleitung verdrängt. Bei einer vorzugsweise seitlichen Anordnung der Einlassöffnung an der Behälterwand kann diese ohne weiteres offen bleiben, da bei einem nach oben Ziehen des Behälters praktisch kein Austausch mehr zwischen der Füllung innerhalb des Behälters und der Füllung außerhalb des Behälters stattfindet.

Die erfindungsgemäße Vorrichtung und insbesondere der Aufnahmeraum sind so weitgehend frei von beweglichen Komponenten und auch aufblasbaren Elementen, was den Reinigungs- und Wartungsaufwand erheblich reduziert. Die Reduktion der Komponenten und der vereinfachte Aufbau führen auch zu einer erhöhten Lebensdauer der Vorrichtung. Vorzugsweise ist in dem Aufnahmeraum ein Wechselbehälterelement lösbar eingesetzt. Dieses kann mit der Probe aus dem Behälter entnommen, vorzugsweise durch einen Gewindedeckel verschlossen, und durch ein neues Behälterelement ausgetauscht werden.

Grundsätzlich kann die Verschlusskappe etwa über ein Rückhaltekabel weiter mit dem Behälter verbunden sein, so dass die Verschlusskappe mehrfach eingesetzt werden kann. Besonders bevorzugt ist es nach einer Ausführungsform der Erfindung, dass die Verschlusskappe als eine verlorene Verschlusskappe ausgebildet ist. Die Verschlusskappe ist insbesondere in kostengünstiger Weise aus einem Kunststoff ausgebildet, so dass diese auch mit einem gewissen Übermaß zum Erzeugen einer Presspassung in die vorzugsweise metallische Außenwand des Behälters eingedrückt werden kann. Die Verschlusskappe kann als ein günstiges Massenteil hergestellt werden, so dass die Kosten für einen Ersatz bei Weitem unter den Kosten für eine eventuelle Reinigung liegen. Die relativ kleine Verschlusskappe mit einem Durchmesser von etwa einigen Zentimetern kann in der aushärtenden Füllung im Loch verbleiben. Vorzugsweise kann die Verschlusskappe auch aus einem biologisch abbaubaren Material, etwa einem Kunststoff aus Biopolymeren, etwa Lignin, hergestellt sein.

Grundsätzlich kann der Behälter als ein beliebiger Hohlkörper ausgeformt sein. Besonders vorteilhaft ist es nach einer Ausführungsvariante der Erfindung, dass der Behälter als ein Rohrkörper ausgebildet ist, welcher an einem oberen Endabschnitt eine Verbindungseinrichtung zum Anschluss der Druckluftleitung aufweist. Ein Rohrkörper, insbesondere aus einem Metall, kann fertigungstechnisch einfach aus einem rohrförmigen Ausgangswerkstück hergestellt werden. Zur Verbindung mit der Druckluftleitung kann jede geeignete Verbindungseinrichtung verwendet werden. Die Druckluftleitung kann ein Schlauch oder ein Rohr sein.

Nach einer Weiterbildung der Erfindung ist es vorteilhaft, dass die Druckluftleitung ein HDI-Gestänge mit einem Gewinde an einem unteren Endabschnitt aufweist und dass der Behälter an das Gewinde angeschraubt ist. Sogenannte Hochdruckinjektionsgestänge, auch HDI-Gestänge genannt, stellen eine Standardgerätschaft für Tiefbauarbeiten dar. Diese dienen zum Einleiten von Suspensionen in den Boden unter Hochdruck. Am unteren Ende des HDI-Gestänges ist ein Düsenkopf angeschraubt. Zum Zweck der Probenentnahme kann ein Düsenkopf von dem HDI-Gestänge entfernt und durch einen geeignet ausgebildeten Behälter der erfindungsgemäßen Vorrichtung ersetzt werden. Dabei weist der Behälter entsprechend ein Gewinde auf, welches mit dem Gewinde an dem HDI-Gestänge korrespondiert. Das HDI-Gestänge kann mittels eines Bohrgeräts verfahren werden.

Ein leichtes Einbringen der erfindungsgemäßen Vorrichtung wird nach einer Weiterbildung dadurch erreicht, dass an einem unteren Endabschnitt des Behälters eine Spitze angeordnet ist. Vorzugsweise ist die Spitze lösbar angebracht.

Insbesondere ist es nach einer Weiterbildung der Erfindung vorteilhaft, dass an der Spitze eine weitere Öffnung vorgesehen ist, welche mit einem Auslassstopfen verschlossen ist. Diese mindestens eine weitere Öffnung kann insbesondere als eine Auslassöffnung verwendet werden, um die entnommene Probe aus dem Behälter in einer vertikalen Anordnung abzulassen. Üblicherweise wird hierzu der Behälter über einem Auffangelement positioniert, in welchem die Probe ausgelassen wird. Der Probenkörper kann dann noch in dem fließfähigen Zustand oder nach Aushärtung untersucht und zu Dokumentationszwecken gelagert werden.

Alternativ oder ergänzend kann zu der Spitze gemäß einer weiteren bevorzugten Ausführungsform vorgesehen sein, dass an einem unteren Endabschnitt des Behälters ein Auslassventil angeordnet ist, mit welchem als Probe entnommene Füllung aus dem Behälter auslassbar ist. Das Auslassventil kann im einfachsten Fall ein einfaches Sperrventil sein, welches geöffnet und geschlossen werden kann. Dies erlaubt eine schnelle und einfache Entnahme der Füllung aus dem Behälter.

Eine besonders vorteilhafte Ausführungsvariante der Erfindung besteht darin, dass das Auslassventil als ein Rückschlagventil mit einem nach unten gerichteten Betätigungsstift ausgebildet ist. Das Auslassventil ist dabei insbesondere zwischen dem Behälter und der Spitze angeordnet. Zum Entleeren des Behälters kann die Spitze von dem Behälter entfernt werden, etwa durch Abschrauben bei einer üblichen Gewindeverbindung. In dem Normalzustand ist das Rückschlagventil geschlossen, so dass die Füllung zunächst in dem Behälter zurückgehalten wird. In dieser Anordnung steht der nach unten gerichtete Betätigungsstift gegenüber der rohrförmigen Behälterwand nach unten vor. Durch Aufsetzen des Behälters mit dem nach unten gerichteten Betätigungsstift auf eine Entnahmefläche kann der Betätigungsstift nach oben gedrückt und so das Rückschlagventil geöffnet werden. Hierdurch wird ein besonders effizientes und zuverlässiges Auslassen der Füllung aus dem Behälter erreicht. Der federgespannte Stift schließt das Ventil wieder, wenn der Druck auf den Stift wieder entfällt.

Das erfindungsgemäße Verfahren ist dadurch gekennzeichnet, dass in die Einlassöffnung des Behälters eine Verschlusskappe gesteckt und die Einlassöffnung verschlossen wird, dass der Behälter der Vorrichtung bis zu einer gewünschten Tiefe in das Loch eingebracht wird, dass über eine Druckluftleitung Druckluft in den Aufnahmeraum eingeleitet wird, wobei die Verschlusskappe von der Einlassöffnung gelöst und diese freigegeben wird, dass durch die Einlassöffnung Füllung in den Aufnahmeraum des Behälters einströmt und dass die Vorrichtung mit dem gefüllten Behälter aus dem Loch gezogen wird.

Das erfindungsgemäße Verfahren wird vorzugsweise mit der zuvor genannten Vorrichtung durchgeführt. Es können dabei die zuvor beschriebenen Vorteile erreicht werden. Insbesondere kann die Druckluft frei in den Aufnahmeraum des Behälters einströmen und ohne Zwischenschaltung einer weiteren Komponente unmittelbar die Verschlusskappe nach außen aus der Einlassöffnung austreiben. Nach dem Austreiben kann der Druck innerhalb des Aufnahmeraums durch eine entsprechende Entlüftung wieder reduziert werden, so dass die umgebenden Suspension als Füllung über die Einlassöffnung in den Behälter einströmen kann, bis ein gewünschter Füllstand erreicht ist. Der Füllstand kann durch eine vorgegebene Einströmdauer oder mittels eines Füllstandsensors bestimmt werden. Es kann ein Sperrventil, etwa betätigt durch einen Schwimmer, vorgesehen sein, wobei ein Eintritt von Suspension in die Druckluftleitung verhindert wird.

Eine bevorzugte Verfahrensvariante besteht nach der Erfindung darin, dass der Behälter an einem unteren Ende eines HDI-Gestänges angebracht wird, durch welches Druckluft in den Behälter eingeleitet wird. Bei einem HDI-Gestänge kann ohne Weiteres eine Druckluftquelle angeschlossen werden, insbesondere ein Kompressor zum Erzeugen von Druckluft.

Eine weiter vorteilhafte Verfahrensvariante der Erfindung besteht darin, dass der Behälter mit geöffneter Einlassöffnung aus dem Loch gezogen wird. Die Einlassöffnung befindet sich dabei vorzugsweise in einer horizontalen Ausrichtung an einer seitlichen Behälterwand. Nach dem Auffüllen des Behälters bei einer vorgesehenen Tiefe in dem Loch kann beim anschließenden Ziehen des Behälters aus dem Loch praktisch keine weitere Füllung mehr in die Einlassöffnung einströmen, so dass die Probe unverfälscht bleibt. Es können grundsätzlich auch mehrere Einlassöffnungen vorgesehen sein.

Die Erfindung wird nachfolgend anhand eines bevorzugten Ausführungsbeispiels weiter beschrieben, welches schematisch in den Zeichnungen dargestellt ist. In den Zeichnungen zeigen:
- Figur 1: eine schematische Explosionsdarstellung einer erfindungsgemäßen Vorrichtung von der Seite;
- Figur 2: eine Darstellung entsprechend Figur 1 um 90 ° gedreht und
- Figur 3: eine schematische Querschnittsansicht eines Behälters der Vorrichtung der Figuren 1 und 2.

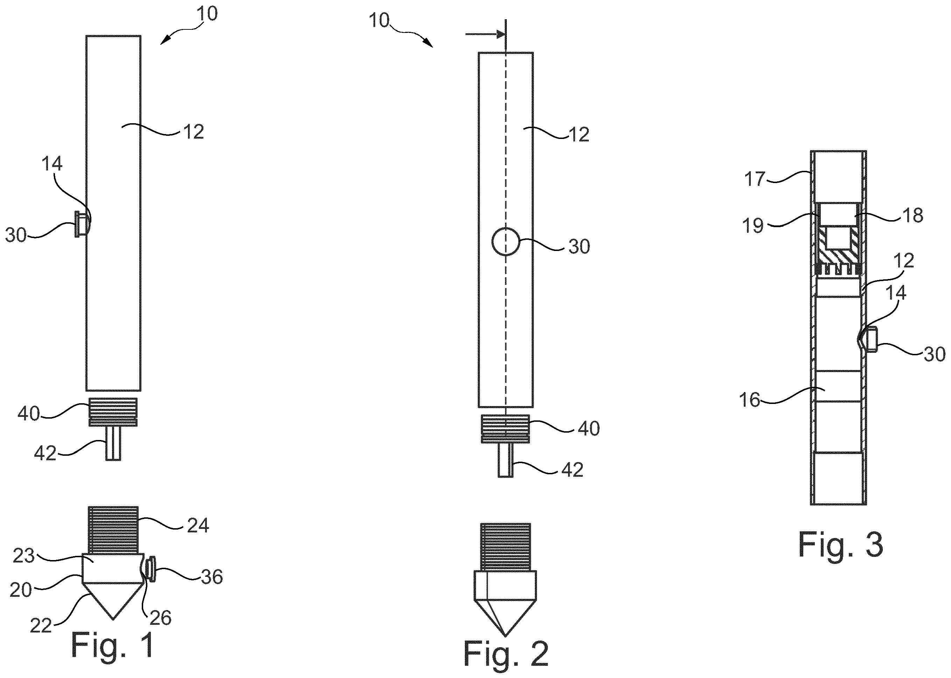

Eine bevorzugte Ausführungsform einer erfindungsgemäßen Vorrichtung 10 mit einem rohrförmigen Behälter 12 ist in den Figuren 1 bis 3 gezeigt. Der rohrförmige Behälter 12 weist in seinem Inneren einen etwa zylindrischen Aufnahmeraum 16 zur Aufnahme von Füllung als eine Probe auf. An einem unteren Endabschnitt 15 ist ein Auslassventil 40 angeordnet, welches als ein Rückschlagventil mit einem nach unten gerichteten Betätigungsstift 42 ausgebildet ist. Über eine entsprechende Gewindeverbindung ist das Auslassventil 40 in den unteren Endabschnitt 15 des Behälters 12 eingeschraubt und dichtet den Behälter 12 nach unten ab. In einem normalen Betriebszustand ist das Auslassventil 40 geschlossen. Durch ein axiales nach oben Drücken des Betätigungsstiftes 42 kann das Auslassventil 40 geöffnet werden, so dass eine fließfähige Füllung in dem Aufnahmeraum 16 nach unten aus dem Behälter 12 ausströmen kann.

Für ein Einbringen der Vorrichtung 10 in ein mit Suspension gefülltes Loch im Boden kann an dem unteren Endabschnitt 15 des Behälters 12 alternativ oder ergänzend eine Spitze 20 angeordnet sein. Die Spitze 20 weist in der dargestellten Ausführungsform einen unteren Konusabschnitt 22, eine mittleren Zylinderabschnitt 23 und einen durchmesserkleineren oberen Gewindeabschnitt 24 auf. Mit dem Gewindeabschnitt 24 kann die Spitze 20 lösbar am unteren Endabschnitt 15 in den Behälter 12 eingeschraubt werden. Die innen hohl ausgebildete Spitze weist in dem Zylinderabschnitt 23 eine Öffnung 26 auf, welche mit einem Auslassstopfen 36 verschließbar ist. Nach Entfernen des Auslassstopfens 36 kann über die Öffnung 26 Probenmaterial in dem Behälter 12 aus dem Aufnahmeraum 16 ausströmen.

An einem oberen Endabschnitt 17 ist eine Verbindungseinrichtung 18 mit einem Innengewinde 19 ausgebildet. Die Verbindungseinrichtung 18 mit dem Innengewinde 19 dient zum lösbaren Befestigen des Behälters 12 an einem nicht dargestellten und grundsätzlich bekannten HDI-Gestänge. An dem HDI-Gestänge ist die untere Düsenspitze entfernt, so dass in diesem Zustand der Behälter 12 ohne weiteres angeschraubt werden kann. Die Betätigung des HDI-Gestänges erfolgt in bekannter Weise etwa mittels eines Bohrgerätes, mit dem das HDI-Gestänge und damit auch die Vorrichtung 10 in ein Loch abgesenkt und hieraus wieder gezogen werden kann.

In einem Seitenbereich des rohrförmigen Behälters 12 ist eine etwa kreisförmige Einlassöffnung 14 eingebracht. In einem Ausgangszustand ist die Einlassöffnung 14 mittels einer Verschlusskappe 30 verschlossen. Die Verschlusskappe 30 ist vorzugsweise aus einem weicheren Material, etwa einem Kunststoffmaterial, und kann mit einer leichten Presspassung in die Einlassöffnung 14 des vorzugsweise aus Metall, insbesondere Stahl gefertigten Behälters 12 eingedrückt werden.

Zur Probenentnahme wird die Vorrichtung 10 mit dem HDI-Gestänge bis zu einer gewünschten Tiefe in einem Loch mit einer fließfähigen Füllung eingebracht. Bei Erreichen der gewünschten Probeentnahmeposition wird über das HDI-Gestänge Druckluft durch die Verbindungseinrichtung 18 in den Aufnahmeraum 16 des Behälters 12 eingeleitet. Dabei wird in dem Aufnahmeraum 16 ein Druck aufgebaut, durch welchen die Verschlusskappe 30 aus der Einlassöffnung 14 nach außen ausgetrieben und so die Einlassöffnung 14 freigegeben wird. Durch die Einlassöffnung 14 kann nunmehr fließfähiges Material der Füllung in den Aufnahmeraum 16 bis zu einem gewünschten Niveau einströmen. Die Luft innerhalb des Aufnahmeraums 16 kann dabei bei entsprechender Entlüftung nach oben über das HDI-Gestänge entweichen. Bei Erreichen der vorgegebenen Füllung wird die Vorrichtung 10 wieder aus dem Loch gezogen, wobei nach einer Erkenntnis der Erfindung trotz der geöffneten seitlichen Einlassöffnung 14 kein nennenswerter Austausch mehr zwischen der Füllung innerhalb des Behälters 12 und außerhalb stattfindet.

Nach dem Ziehen der Vorrichtung 10 aus dem Loch im Boden kann der Behälter 12 von dem HDI-Gestänge abgeschraubt und sodann die Spitze 20 entfernt werden. Anschließend kann der Betätigungsstift 42 an dem Auslassventil 40 axial nach oben eingedrückt und so das Auslassventil 40 geöffnet werden. Dies kann etwa dadurch erfolgen, dass der Behälter 12 mit dem Betätigungsstift 42 auf eine Grundfläche einer Probenaufnahme aufgesetzt wird. Nach dem Entleeren des Aufnahmeraumes 16 kann der Behälter 12 wieder von der Grundfläche abgehoben werden, wobei der Betätigungsstift 42 vorzugsweise durch eine Federspannung wieder in die ursprüngliche Sperrposition rückgestellt wird, in welche das Auslassventil 40 verschlossen ist.

Die Vorrichtung kann durch einfaches Durchleiten von Wasser zuverlässig gereinigt werden. Anschließend kann die Vorrichtung 10 für eine weitere Probeentnahme wieder zusammengesetzt und an das HDI-Gestänge angeschraubt werden.

## Patentansprüche

1. Vorrichtung zur Entnahme einer Probe einer Füllung, mit welcher ein Loch im Boden gefüllt ist, mit einem Behälter (12) mit mindestens einer Einlassöffnung (14) zum Einströmen der Füllung in einen Aufnahmeraum (16) des Behälters (12),
**dadurch gekennzeichnet,**
- **dass** eine Verschlusskappe (30) auf die Einlassöffnung (14) gesteckt und diese hierdurch verschlossen ist und
- **dass** der Behälter (12) mit einer Druckluftleitung versehen ist, welche in den Aufnahmeraum (16) mündet, welcher so ausgebildet ist, dass bei Einleitung von Druckluft in den Aufnahmeraum (16) die Verschlusskappe (30) von der Einlassöffnung (14) gelöst und diese somit zum Einströmen der Füllung freigegeben ist.

2. Vorrichtung nach Anspruch 1,
**dadurch gekennzeichnet,**
**dass** die Verschlusskappe (30) als eine verlorene Verschlusskappe (30) ausgebildet ist.

3. Vorrichtung nach Anspruch 1 oder 2,
**dadurch gekennzeichnet,**
**dass** der Behälter (12) als ein Rohrkörper ausgebildet ist, welcher an einem oberen Endabschnitt (17) eine Verbindungseinrichtung (18) zum Anschluss der Druckluftleitung aufweist.

4. Vorrichtung nach einem der Ansprüche 1 bis 3,
**dadurch gekennzeichnet,**
**dass** die Druckluftleitung ein HDI-Gestänge mit einem Gewinde an einem unteren Ende aufweist und
**dass** der Behälter (12) an das Gewinde angeschraubt ist.

5. Vorrichtung nach einem der Ansprüche 1 bis 4,
**dadurch gekennzeichnet,**
**dass** an einem unteren Endabschitt (15) des Behälters (12) eine Spitze (20) angeordnet ist.

6. Vorrichtung nach Anspruch 5,
**dadurch gekennzeichnet,**
**dass** an der Spitze (20) eine weitere Öffnung vorgesehen ist, welche mit einem Auslassstopfen verschlossen ist.

7. Vorrichtung nach einem der Ansprüche 1 bis 6,
**dadurch gekennzeichnet,**
**dass** an einem unteren Endabschnitt (15) des Behälters (12) ein Auslassventil (40) angeordnet ist, mit welchem als Probe entnommene Füllung aus dem Behälter (12) auslassbar ist.

8. Vorrichtung nach Anspruch 7,
**dadurch gekennzeichnet,**
**dass** das Auslassventil (40) als ein Rückschlagventil mit einem nach unten gerichteten Betätigungsstift (42) ausgebildet ist.

9. Verfahren zur Entnahme einer Probe einer Füllung, mit welcher ein Loch im Boden gefüllt ist, mittels einer Vorrichtung (10) nach einem der Ansprüche 1 bis 8, mit einem Behälter (12) mit mindestens einer Einlassöffnung (14), durch welche Füllung in einen Aufnahmeraum (16) des Behälters (12) einströmt, **dadurch gekennzeichnet,**
- **dass** in die Einlassöffnung (14) des Behälters (12) eine Verschlusskappe (30) gesteckt und die Einlassöffnung (14) verschlossen wird,
- **dass** der Behälter (12) der Vorrichtung (10) bis zu einer gewünschten Tiefe in das Loch eingebracht wird,
- **dass** über eine Druckluftleitung Druckluft in den Aufnahmeraum (16) eingeleitet wird, wobei die Verschlusskappe (30) von der Einlassöffnung gelöst und diese freigegeben wird,
- **dass** durch die Einlassöffnung Füllung in den Aufnahmeraum (16) des Behälters einströmt und
- **dass** die Vorrichtung (10) mit dem gefüllten Behälter (12) aus dem Loch gezogen wird.

10. Verfahren nach Anspruch 9,
**dadurch gekennzeichnet,**
**dass** der Behälter (12) an einem unteren Ende eines HDI-Gestänges angebracht wird, durch welches Druckluft in den Behälter (12) eingeleitet wird.

11. Verfahren nach Anspruch 9 oder 10,
**dadurch gekennzeichnet,**
**dass** der Behälter (12) mit geöffneter Einlassöffnung (14) aus dem Loch gezogen wird.

## Claims

1. Device for taking a sample of a filling, with which a hole in the ground is filled, having a container (12) with at least one inlet opening (14) for the inflow of the filling into a receiving space (16) of the container (12),
**characterized in that**
- a closing cap (30) is placed onto the inlet opening (14) and this is closed thereby and
- **in that** the container (12) is provided with a compressed air line which leads into the receiving space (16), which is designed in such a manner that on feeding compressed air into the receiving space (16) the closing cap (30) is released from the inlet opening (14) and thus this is exposed for the inflow of the filling.

2. Device according to claim 1,
**characterized in that**
the closing cap (30) is designed as a lost closing cap (30).

3. Device according to claim 1 or 2,
**characterized in that**
the container (12) is designed as a tubular body which has a connecting means (18) on an upper end section (17) for attachment of the compressed air line.

4. Device according to any one of claims 1 to 3,
**characterized in that**
the compressed air line has a high-pressure injection rod with a thread on a lower end and
**in that** the container (12) is screwed onto the thread.

5. Device according to any one of claims 1 to 4,
**characterized in that**
on a lower end section (15) of the container (12) a tip (20) is arranged.

6. Device according to claim 5,
**characterized in that**
on the tip (20) a further opening is provided which is closed by a discharge plug.

7. Device according to any one of claims 1 to 6,
**characterized in that**
on a lower end section (15) of the container (12) a discharge valve (40) is arranged, with which a filling taken as a sample can be discharged from the container (12).

8. Device according to claim 7,
**characterized in that**
the discharge valve (40) is designed as a non-return valve with a downward directed actuating pin (42).

9. Method for taking a sample of a filling, with which a hole in the ground is filled, by means of a device (10) according to any one of claims 1 to 8, having a container (12) with at least one inlet opening (14), through which a filling flows into a receiving space (16) of the container (12),
**characterized in that**
- a closing cap (30) is placed into the inlet opening (14) of the container (12) and the inlet opening (14) is closed,
- **in that** the container (12) of the device (10) is introduced up to a desired depth into the hole,
- **in that** via a compressed air line compressed air is fed into the receiving space (16), wherein the closing cap (30) is released from the inlet opening and this is exposed,
- **in that** through the inlet opening a filling flows into the receiving space (16) of the container and
- **in that** the device (10) with the filled container (12) is withdrawn from the hole.

10. Method according to claim 9,
**characterized in that**
the container (12) is fixed on a lower end of a high-pressure injection rod, through which compressed air is fed into the container (12).

11. Method according to claim 9 or 10,
**characterized in that**
the container (12) is withdrawn from the hole with the inlet opening (14) being open.

## Revendications

1. Dispositif de prélèvement d'un échantillon d'une matière de remplissage, avec laquelle un trou dans le sol est rempli, avec un contenant (12) avec au moins une ouverture d'entrée (14) servant à faire affluer la matière de remplissage dans un espace de réception (16) du contenant (12),
**caractérisé en ce que**
- un capuchon de fermeture (30) est emboîté sur l'ouverture d'entrée (14) et celle-ci est ainsi fermée, et
- **en ce que** le contenant (12) est pourvu d'un conduit d'air comprimé, qui débouche dans l'espace de réception (16), lequel est réalisé de telle sorte lors de l'introduction d'air comprimé dans l'espace de réception (16), le capuchon de fermeture (30) est détaché de l'ouverture d'entrée (14) et celle-ci est ainsi dégagée pour faire affluer la matière de remplissage.

2. Dispositif selon la revendication 1,
**caractérisé en ce que**
le capuchon de fermeture (30) est réalisé sous la forme d'un capuchon de fermeture (30) perdu.

3. Dispositif selon la revendication 1 ou 2,
**caractérisé en ce que**
le contenant (12) est réalisé sous la forme d'un corps tubulaire, lequel présente, au niveau d'une section d'extrémité supérieure (17), un système de liaison (18) servant au raccordement du conduit d'air comprimé.

4. Dispositif selon l'une des revendications 1 à 3,
**caractérisé en ce que**
le conduit à air comprimé présente une tige d'injection à pression élevée avec un filetage au niveau d'une extrémité inférieure, et
**en ce que** le contenant (12) est vissé au niveau du filetage.

5. Dispositif selon l'une des revendications 1 à 4,
**caractérisé en ce que**
une pointe (20) est disposée au niveau d'une section d'extrémité inférieure (15) du contenant (12).

6. Dispositif selon la revendication 5,
**caractérisé en ce qu'**est prévue, au niveau de la pointe (20), une autre ouverture, laquelle est fermée avec un bouchon de sortie.

7. Dispositif selon l'une des revendications 1 à 6,
**caractérisé en ce que**
est disposée, au niveau d'une section d'extrémité inférieure (15) du contenant (12), une soupape de sortie (40), avec laquelle une matière de remplissage prélevée en tant qu'échantillon peut être évacuée hors du contenant (12).

8. Dispositif selon la revendication 7,
**caractérisé en ce que**
la soupape de sortie (40) est réalisée sous la forme d'une soupape anti-retour avec une goupille d'actionnement (42) dirigée vers le bas.

9. Procédé servant à prélever un échantillon d'une matière de remplissage, avec laquelle un trou dans le sol est rempli, au moyen d'un dispositif (10) selon l'une des revendications 1 à 8, avec un contenant (12) avec au moins une ouverture d'entrée (14), par laquelle de la matière de remplissage afflue dans un espace de réception (16) du contenant (12),
**caractérisé en ce que**
- un capuchon de fermeture (30) est emboîté dans l'ouverture d'entrée (14) du contenant (12) et l'ouverture d'entrée (14) est fermée,
- **en ce que** le contenant (12) du dispositif (10) est introduit dans le trou jusqu'à une profondeur souhaitée,
- **en ce que** de l'air comprimé est acheminé dans l'espace de réception (16) par l'intermédiaire d'un conduit d'air comprimé, dans lequel le capuchon de fermeture (30) est détaché de l'ouverture d'entrée et celle-ci est dégagée,
- **en ce que** de la matière de remplissage afflue dans l'espace de réception (16) du contenant par l'ouverture d'entrée, et
- **en ce que** le dispositif (10) est tiré hors du trou avec le contenant (12) rempli.

10. Procédé selon la revendication 9,
**caractérisé en ce que**
le contenant (12) est installé au niveau d'une extrémité inférieure d'une tige d'injection à haute pression, par laquelle de l'air comprimé est acheminé dans le contenant (12).

11. Procédé selon la revendication 9 ou 10,
**caractérisé en ce que**
le contenant (12) est tiré hors du trou avec une ouverture d'entrée (14) ouverte.
